# FASCICULE DE BREVET EUROPEEN

(11) **EP 2 364 757 B1**
(45) Date de publication et mention de la délivrance du brevet: **09.05.2012**
(21) Numéro de dépôt: 11153172.9
(22) Date de dépôt: 03.02.2011
(51) Int. Cl.: A63H 30/04, A63H 27/133, G08C 17/02, G06F 3/041, A63F 9/24, A63F 13/10

(54) **Procédé et appareil de télécommande d'un drone, notamment d'un drone à voilure tournante**
Verfahren und Gerät zur Fernbedienung einer Drohne, insbesondere einer Drohne mit Drehflügeln
Method and device for remote control of a drone, in particular a rotary-wing drone

(30) Priorité: 11.03.2010 FR 1051751; 07.06.2010 FR 1054449
(43) Date de publication de la demande: 14.09.2011
(73) Titulaire: Parrot, 75010 Paris (FR)
(72) Inventeur: Seydoux, Henri, 75017, PARIS (FR); D'Haeyer, Frédéric, 77500, CHELLES (FR)
(74) Mandataire: Dupuis-Latour, Dominique

(56) Documents cités:
- EP-A1- 1 621 238
- WO-A2-2009/109711
- FR-A1- 2 903 024
- US-A1- 2005 048 918
- US-A1- 2006 226 298
- US-A1- 2007 077 541

## Description

L'invention concerne la télécommande des drones, notamment des drones à voilure tournante tels que les hélicoptères, quadricoptères et analogues.

Un exemple typique de tels drones est le *AR.Drone* de Parrot SA, Paris, France, qui est un quadricoptère équipé d'une série de capteurs (accéléromètres et gyromètres trois axes, altimètre, caméra de visée verticale) ainsi que d'un système de stabilisation automatique en vol stationnaire dont le principe est décrit dans le WO 2009/109711 (Parrot). Le drone est également pourvu d'une caméra frontale captant une image de la scène vers laquelle se dirige le drone.

Le système de stabilisation automatique permet notamment au drone d'obtenir de manière automatique un point d'équilibre et, lorsque ce point d'équilibre est atteint, d'apporter les corrections nécessaires pour maintenir le point fixe par *trimming,* c'est-à-dire par correction des infimes variations de translation dues aux effets externes tels que déplacements d'air et dérive des capteurs.

Ce drone est piloté par l'utilisateur au moyen d'un dispositif de télécommande déporté, ci-après désigné "appareil", relié au drone par une liaison radio telle qu'une liaison sans fil de type réseau local *Wi-Fi* (IEEE 802.11) ou *Bluetooth* (marques déposées).

De façon particulièrement avantageuse, le drone peut être piloté au moyen d'un appareil de télécommande comprenant un écran tactile, des moyens émetteurs/récepteurs sans fil, ainsi que des capteurs d'inclinaison deux axes formant capteurs d'attitude du boîtier de l'appareil par rapport à une verticale de référence liée à un référentiel terrestre. L'écran de l'appareil reproduit l'image de la caméra frontale embarquée, transmise par la liaison sans fil, et divers symboles de pilotage et de commande sont superposés à cette image de manière à permettre une activation de ces commandes par contact du doigt de l'utilisateur sur l'écran tactile. L'utilisateur dispose en fait de deux modes de pilotage différents, activables à volonté.

Le *premier mode de pilotage,* ci-après désigné "mode autopiloté" est le mode de pilotage par défaut, et il met en oeuvre le système de stabilisation automatique et autonome du drone. Le déplacement du drone est défini comme un déplacement d'un état stable à un autre état stable, le changement correspondant du point fixe étant opéré par des commandes autonomes (le mode autopiloté le plus simple consistant à simplement asservir le drone en point fixe).

Le *second mode de pilotage,* ci-après désigné "mode réactif" est un mode dans lequel le pilotage du drone est opéré de façon plus directe par l'utilisateur, au moyen d'une combinaison :
- d'une part, de signaux émis par le détecteur d'inclinaison de l'appareil : par exemple, pour faire avancer le drone l'utilisateur incline son appareil selon l'axe de tangage correspondant, et pour déporter le drone à droite ou à gauche il incline ce même appareil par rapport à l'axe de roulis ; et
- d'autre part, de commandes disponibles sur l'écran tactile, notamment "montée/descente" (correspondant à une commande des gaz) et "virage à droite/virage à gauche" (pivotement du drone autour d'un axe de lacet).

Le basculement du mode autopiloté au mode réactif se fait par appui du doigt sur un symbole spécifique affiché sur l'écran tactile. L'appui du doigt sur ce symbole provoque l'activation immédiate du mode réactif, qui reste activé tant que le contact du doigt reste maintenu à cet endroit. Le pilotage est alors obtenu par inclinaisons de l'appareil et/ou la manipulation des symboles "montée/descente" et "virage à droite/virage à gauche" affichés sur l'écran tactile.

Le mode autopiloté (par exemple mis en oeuvre de la manière décrite dans le WO 2009/109711 précité) est activé dès que l'utilisateur retire son doigt du symbole correspondant.

Cette manière de procéder permet un pilotage tout à fait efficace et intuitif ; il présente cependant plusieurs inconvénients.

Un *premier inconvénient* tient au fait que, pour la désactivation du mode autopiloté, et pour passer au pilotage en mode réactif, l'utilisateur doit regarder l'écran de l'appareil, afin de poser son doigt précisément à l'endroit où se trouve le symbole correspondant à la commande qu'il veut activer (activation/désactivation du mode autopiloté ; montée/descente ; virage à droite/virage à gauche autour d'un axe de lacet).

Cette obligation est généralement perçue par l'utilisateur comme une contrainte, car il doit alors quitter des yeux le drone - précisément au moment où il prend la main pour piloter le drone en mode réactif, ce qui est gênant car alors le drone se pilote à vue et il n'est pas bon de le quitter des yeux. Il est en effet bien plus facile de contrôler les évolutions du drone en le regardant, plutôt qu'avec le retour vidéo de la caméra embarquée, qui ne permet pas de percevoir certains obstacles hors du champ de la caméra (plafond dans un espace clos, etc.).

En tout état de cause, le mode réactif, s'il comporte des commandes intuitives (pilotage par inclinaisons de l'appareil selon deux axes), nécessite de continuer à regarder l'écran pour les contrôles de montée/descente et de rotation selon l'axe de lacet (pilotage par appui sur des symboles affichés sur l'écran tactile).

Un *deuxième inconvénient* tient au fait que, pour les commandes intuitives de pilotage en inclinant l'appareil dans un sens ou dans l'autre sur deux axes, il est nécessaire de tenir l'appareil à plat. Cette manière de procéder est gênante notamment en extérieur, car un reflet du soleil peut empêcher de voir correctement l'écran de l'appareil ; pour éviter ce reflet, l'utilisateur inclinera son appareil, mais dans ce cas il ne sera plus possible de passer en mode réactif puisque l'appareil ne sera plus horizontal.

Un *troisième inconvénient* tient au fait que le pilotage en mode réactif nécessite l'utilisation simultanée de deux doigts, avec un doigt de la main gauche pour l'activation des commandes de rotation à droite/rotation à gauche, et un doigt de la main droite pour l'activation des commandes de montée/descente (ou l'inverse). Si l'utilisateur veut actionner une autre fonctionnalité, par exemple un ordre de tir virtuel par appui sur un symbole "mise à feu" affiché sur l'écran tactile, il sera nécessaire qu'il quitte une commande pour appuyer avec le doigt sur ce symbole.

Un *quatrième inconvénient* tient au fait que cinq zones tactiles sont définies uniquement pour le pilotage, et qu'ainsi l'usage simultané des deux doigts masque souvent des messages ou des informations essentiels pour l'utilisateur.

Un *cinquième inconvénient* tient au fait que l'on ne peut s'adresser aux gauchers et aux droitiers de la même manière, les contrôles n'étant pas symétriques.

Un *sixième inconvénient* tient au fait que le drone est souvent un élément d'un jeu vidéo dans lequel le joueur pilote le drone et doit en même temps effectuer des actions de jeu, par exemple tirer sur des cibles virtuelles ou réelles. La commande de tir doit alors être activée très rapidement, presque instinctivement, par le joueur, alors que son attention est accaparée par le pilotage, que ses mains sont occupées et que sa vue est mobilisée à regarder le drone.

D'autres interfaces de commande ou de pilotage sont décrites par exemple dans les EP 1 621 238 A1 (émulation d'un dispositif de pointage de type *joystick* au point de contact d'un stylet ou d'un doigt sur un écran tactile) ou US 2007/077541 A1 (pilotage par action d'un stylet ou du doigt sur un volant affiché sur l'écran tactile). Mais aucune de ces propositions n'est en mesure de pallier les inconvénients exposés ci-dessus.

Le but de l'invention est de remédier à ces divers inconvénients, en proposant un appareil à écran tactile de télécommande d'un drone tel que celui décrit dans le WO 2009/109711 précité et :
- qui ne nécessite de regarder l'écran (i) ni pour basculer du mode autopiloté au mode réactif et *vice versa,* ni (ii) pour actionner les commandes de pilotage par symboles du mode réactif ;
- qui laisse l'utilisateur libre de tenir son appareil penché pendant toute la phase de pilotage en mode réactif ;
- qui ne nécessite qu'un doigt d'une main pour le pilotage en mode réactif, en regroupant toutes les commandes de pilotage activées via l'écran tactile (montée/descente, virage à droite/virage à gauche), l'autre main étant ainsi libérée, en particulier pour l'activation de fonctions spéciales telles que le déclenchement d'un tir virtuel ;
- qui permette l'activation par l'utilisateur de ces commandes spéciales, notamment de tir, de la façon la plus intuitive et spontanée, sans incidence sur le pilotage proprement dit ;
- qui, enfin, soit compatible avec l'utilisation d'un périphérique d'affichage déporté de type lunettes vidéo, pour permettre un pilotage de type "affichage tête haute".

L'invention propose à cet effet un procédé pour la mise en oeuvre d'un appareil de télécommande, cet appareil étant, de manière connue, constitué d'un appareil portatif comprenant : un écran tactile ; des moyens aptes à détecter au moins un contact d'un doigt d'un utilisateur sur la surface de l'écran, et à déterminer la position de ce au moins un point de contact du doigt par rapport à un symbole correspondant affiché sur l'écran ; et des moyens de transmission sans fil de données, aptes à émettre des commandes à destination du drone. Des commandes de pilotage sont activables par contact et/ou déplacement du doigt à l'emplacement de symboles de pilotage correspondants affichés sur l'écran.

De façon caractéristique de l'invention, le procédé comprend les étapes de : a) détection du contact du doigt en un point de contact quelconque d'au moins une zone prédéfinie de l'écran ; b) affichage sur l'écran, à ce point de contact, d'une icône de pilotage comportant une icône mobile dont la position d'affichage sur l'écran suit le déplacement éventuel du point de contact du doigt sur l'écran depuis une position initiale jusqu'à une position décalée ; c) détection de ce déplacement de l'icône mobile ; d) sur détection du déplacement, analyse de la direction et/ou de l'amplitude et/ou de la vitesse de ce déplacement par rapport à la position initiale ; et g) activation d'une commande de pilotage fonction du résultat de cette analyse.

Avantageusement, le procédé comprend en outre, après analyse de la direction et/ou de l'amplitude et/ou de la vitesse de déplacement du doigt par rapport à la position initiale, une étape e) de discrimination de la commande de pilotage à activer à l'étape g) parmi plusieurs commandes de pilotage différentes, en fonction de la direction du déplacement. Cette commande de pilotage à activer à l'étape peut notamment être une commande de montée ou de descente du drone, lorsque la direction du déplacement est principalement orientée vers le haut ou vers le bas, respectivement, par rapport au sens de l'image affichée sur l'écran tactile, et/ou une commande de rotation à gauche ou à droite autour d'un axe de lacet du drone, lorsque la direction du déplacement est principalement orientée vers la gauche ou vers la droite, respectivement, par rapport au sens de l'image affichée sur l'écran tactile.

Le procédé peut par ailleurs prévoir, après analyse de la direction et/ou de l'amplitude du déplacement par rapport à la position initiale, une étape f) de quantification de ladite commande de pilotage à activer à l'étape g) en fonction de l'amplitude dudit déplacement.

Lorsqu'il s'agit de télécommander un drone à voilure tournante pourvu d'un système sélectivement activable de stabilisation autonome en vol stationnaire en l'absence de commande transmise par l'appareil, le système de stabilisation autonome est avantageusement désactivé en réponse à la détection du contact du doigt à l'étape a), reste désactivé après l'étape a) pendant toute la durée où est détecté le contact du doigt, et est activé en réponse à la détection d'une perte de ce contact.

Dans une variante avantageuse, il est prévu de définir autour du point de contact détecté à l'étape a) une zone neutre telle que le système de stabilisation autonome reste activé tant que la position du point de contact courant du doigt se situe a l'intérieur de cette zone neutre.

De préférence, l'icône de pilotage affichée à l'étape b) comprend, outre l'icône mobile, une icône repère fixe dont la position d'affichage est maintenue à la position initiale du point de contact du doigt sur l'écran même en cas de déplacement consécutif de ce point de contact.

Très avantageusement, dans le cas d'un appareil comportant des moyens pour détecter l'inclinaison de l'appareil selon deux axes par rapport à un axe neutre de référence d'un repère terrestre, la détection du contact du doigt à l'étape a) active des étapes d'enregistrement de la direction de la verticale terrestre par rapport au repère de l'appareil au moment de la détection du contact, et de désignation de cette verticale comme nouvel axe de référence. Une commande de pilotage en rotation selon un axe de tangage et/ou selon un axe de roulis peut notamment être activée en fonction de l'inclinaison de l'appareil respectivement détectée selon l'un et/ou l'autre desdits deux axes par rapport à l'axe de référence.

Dans une variante avantageuse, il est prévu de définir un domaine angulaire neutre autour de l'axe de référence tel que les commandes de tangage et de roulis ne soient activées que pour une inclinaison de l'appareil au-delà de ce domaine angulaire neutre. D'autre part, il est possible de prévoir que le système de stabilisation autonome du drone ne soit désactivé que pour une inclinaison de l'appareil au-delà de ce domaine angulaire neutre.

Selon un autre aspect de l'invention, si l'appareil comporte un capteur accélérométrique, celui-ci peut être utilisé pour détecter un pic d'accélération imprimé à l'appareil par l'utilisateur, et générer une commande en réponse à cette détection de pic, tout particulièrement une commande de tir appliquée en entrée à un logiciel de jeu implémenté dans l'appareil.

La détection peut notamment prévoir un filtrage passe-haut du signal d'accélération délivré par le capteur accélérométrique, avec en outre enregistrement de l'état des commandes de pilotage sur détection d'un pic d'accélération, et maintien de cet état pendant la durée du pic.

Selon un autre aspect encore de l'invention, l'appareil peut être couplé à un périphérique d'affichage déporté, notamment à des lunettes vidéo, avec duplication sur le périphérique déporté de l'icône de pilotage affichée sur l'écran, de manière à réaliser un affichage de type tête haute.

De façon générale, le procédé peut prévoir l'émission d'un signal d'alerte lorsque la distance minimale entre le point de contact détecté à l'étape a) et le bord de la zone prédéfinie de l'écran est inférieure à une distance prédéterminée.

Il peut également prévoir la définition autour du point de contact détecté à l'étape a) d'une zone neutre telle que le déplacement de l'icône de pilotage aux étapes c) et d) ne soit prise en compte que si la position décalée se situe au-delà de ladite zone neutre.

En variante, cette zone neutre peut être telle que le déplacement de l'icône de pilotage aux étapes c) et d) ne soit prise en compte que si la vitesse du déplacement du point de contact du doigt sur l'écran par rapport à la position initiale est supérieure à un seuil minimal prédéterminé. En cas de déplacement inverse du point de contact avec une vitesse du déplacement supérieure à un autre seuil minimal prédéterminé, il est alors prévu une étape de recalage de la position initiale, la nouvelle position initiale étant redéfinie par le point d'achèvement dudit déplacement inverse. L'invention a également pour objet un appareil de télécommande d'un drone comprenant les moyens de mise en oeuvre du procédé exposé ci-dessus, ainsi qu'un logiciel téléchargeable dans un tel appareil, comprenant des instructions aptes mettre en oeuvre ce procédé.

On va maintenant décrire un exemple de mise en oeuvre de l'invention, en référence aux dessins annexés où les mêmes références numériques désignent d'une figure à l'autre des éléments identiques ou fonctionnellement semblables.
La Figure 1 est une vue d'ensemble montrant le drone et l'appareil de télécommande associé permettant son pilotage.
La Figure 2 est un exemple montrant les différentes images et symboles affichés sur l'écran de l'appareil de télécommande, dans le cas de l'état de la technique.
La Figure 3 est homologue de la Figure 2, dans le cas de l'invention.
Les Figures 4 et 5 illustrent la manière dont il est possible de contrôler diverses fonctions de pilotage par le déplacement d'un seul doigt sur l'écran tactile de l'appareil.
la Figure 6 est homologue de la Figure 3, dans le cas d'une variante simplifiée.
La Figure 7 illustre une paire de lunettes vidéo reliée à l'appareil de télécommande pour former un afficheur déporté de type " tête haute".

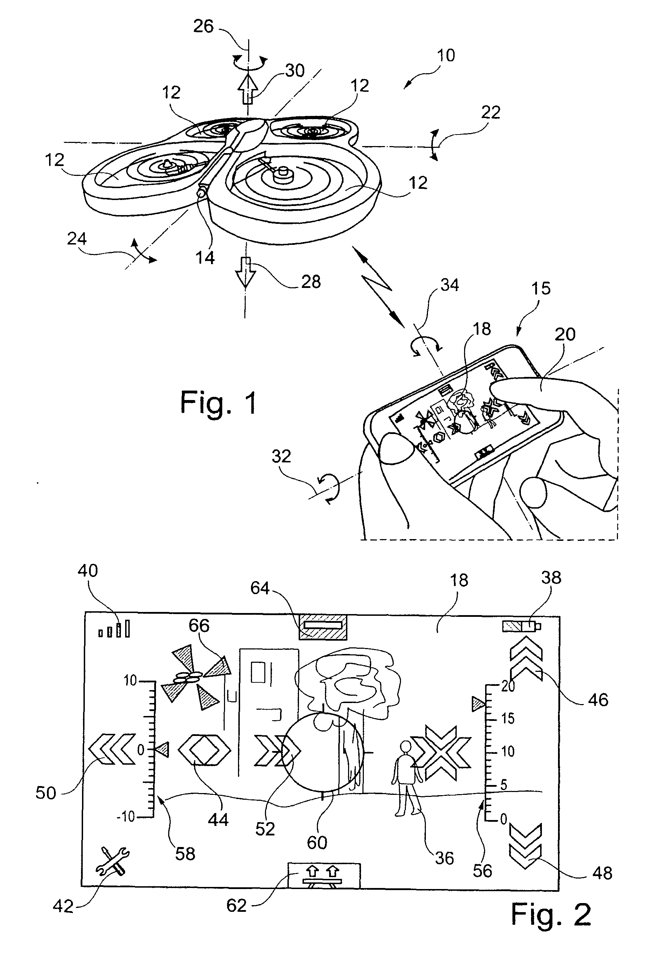

Sur la Figure 1, la référence 10 désigne de façon générale un drone, qui est par exemple un quadricoptère tel que le modèle *AR.Drone* de Parrot SA, Paris, France. Ce drone comporte quatre rotors coplanaires 12 dont les moteurs sont pilotés indépendamment par un système intégré de navigation et de contrôle d'attitude. Le drone 10 comporte également une caméra frontale 14 permettant d'obtenir une image de la scène vers laquelle est dirigé le drone.

Le drone est pourvu d'un système de stabilisation autonome en vol stationnaire en l'absence de toute commande extérieure appliquée par un utilisateur. Ce système, décrit par exemple dans le WO 2009/109711 précité, permet notamment d'apporter les corrections nécessaires pour maintenir l'équilibre du point fixe par des commandes de *trimming* appropriées, c'est-à-dire des commandes de correction des variations de translation dues aux effets externes tels que déplacement d'air et dérive des capteurs.

Le drone 10 est piloté par un appareil de télécommande distant 16, qui est un appareil pourvu d'un écran tactile 18 affichant l'image captée par la caméra embarquée 14 du drone, avec en superposition un certain nombre de symboles permettant l'activation de commandes par simple contact du doigt 20 d'un utilisateur sur l'écran tactile 18.

L'appareil 16 est en outre pourvu de moyens de liaison radio avec le drone permettant l'échange bidirectionnel de données : du drone 10 vers l'appareil 16 notamment pour la transmission de l'image captée par la caméra 14, et de l'appareil 16 vers le drone 10 pour l'envoi de commandes de pilotage. Cette liaison radio peut être par exemple de type réseau local *Wi-Fi* (IEEE 802.11) ou *Bluetooth* (marques déposées).

L'appareil 16 peut être notamment un appareil multimédia ou un assistant numérique personnel, par exemple un téléphone cellulaire du type *iPhone* ou un baladeur multimédia du type *iPod Touch* (marques déposées de Apple Inc., USA), qui sont des appareils incorporant les divers organes de contrôle nécessaires à la détection des commandes de pilotage et à l'échange de données avec le drone par liaison sans fil de type *Wi-Fi.*

Le pilotage du drone 10 consiste à faire évoluer celui-ci par :
a) rotation autour d'un axe de tangage 22, pour le faire avance ou reculer ; et/ou
b) rotation autour d'un axe de roulis 24, pour le déplacer vers la droite ou vers la gauche ; et/ou
c) rotation autour d'un axe de lacet 26, pour faire pivoter vers la droite ou vers la gauche l'axe principal du drone, donc la direction de pointage de la caméra frontale et la direction de progression du drone ; et/ou
d) translation vers le bas 28 ou vers le haut 30 par changement du régime des gaz, de manière à respectivement réduire ou augmenter l'altitude du drone.

Lorsque ces commandes de pilotage sont appliquées directement par l'utilisateur à partir de l'appareil de télécommande 16 (pilotage dit en "mode réactif'), les commandes a) et b) de pivotement autour des axes de tangage 22 et de roulis 24 sont obtenues de façon intuitive par inclinaison de l'appareil 16 respectivement autour de l'axe longitudinal 32 et de l'axe transversal 34 : par exemple, pour faire avancer le drone il suffit d'incliner l'appareil vers l'avant autour de l'axe 32, pour le déporter à droite il suffit d'incliner l'appareil autour de l'axe 34 vers la droite, etc.

Les commandes c) et d), quant à elles, résultent d'actions appliquées par contact du doigt 20 de l'utilisateur sur des zones spécifiques correspondantes de l'écran tactile 18.

La Figure 2 illustre les différentes images et symboles affichés sur l'écran 18 de l'appareil de télécommande, dans le cas de l'état de la technique.

L'écran 18 reproduit la scène 36 capté par la caméra frontale 14 du drone, avec en superposition sur cette image un certain nombre de symboles 38 ... 66 qui sont affichés pour délivrer des informations sur le fonctionnement du drone, et pour permettre par activation tactile le déclenchement et l'envoi de commandes de pilotage correspondantes.

L'appareil affiche ainsi en 38 des informations concernant l'état de la batterie, en 40 le niveau du signal de la liaison entre l'appareil et le drone, et en 42 l'accès à un menu de réglages.

L'écran affiche également un symbole 44 d'activation du mode réactif. Le simple appui sur ce symbole 44 provoque le passage immédiat du drone en mode réactif. Son relâchement entraîne le passage au mode autopiloté avec stabilisation au point fixe atteint en l'absence de commande, le point fixe étant ensuite maintenu immobile par le système de stabilisation intégré au drone.

Pour le pilotage en mode réactif, l'utilisateur dispose, outre les commandes générées par des inclinaisons de l'appareil, de commandes tactiles avec notamment des flèches de montée 46/descente 48 et de rotation en lacet à gauche 50/à droite 52.

L'utilisateur dispose également de l'affichage de données altimétriques 56 et d'inclinaison 58, ainsi que d'un collimateur 60 donnant la direction de pointage de la caméra embarquée, et donc de l'axe principal du drone.

Il est également prévu divers symboles additionnels tels que commande automatique de décollage/atterrissage en 62, déclenchement d'une procédure d'urgence en 64 et réticule de tir virtuel en 66.

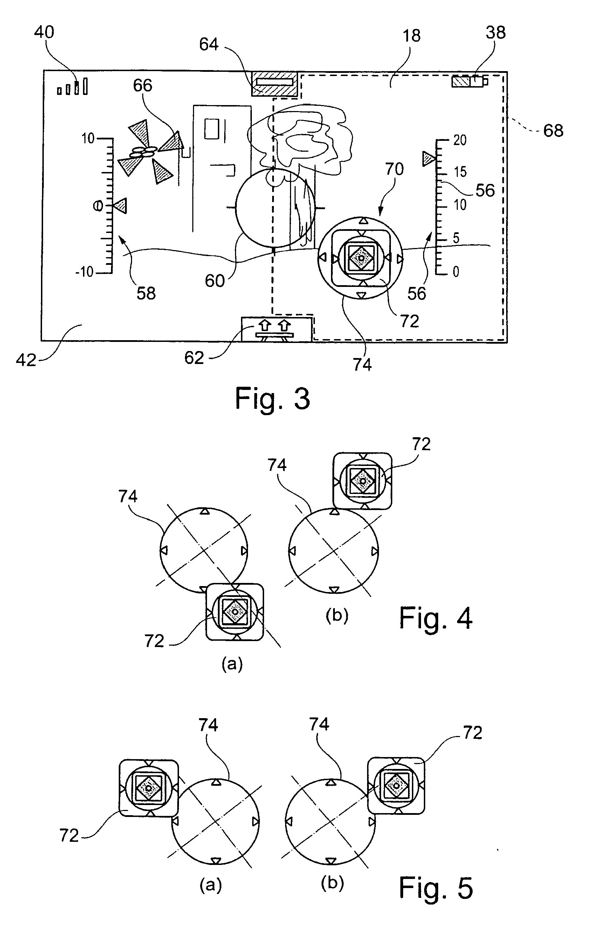

De façon caractéristique de l'invention, ces commandes de pilotage sont modifiées de la façon illustrée Figure 3.

Par rapport à la figure 2, on notera en particulier que les symboles 44 d'activation/désactivation du mode réactif, 46 et 48 de montée/descente et 50, 52 de rotation en lacet, sont supprimés et remplacés par l'affichage d'une unique icône spécifique 70.

Lorsque l'appareil est en mode autopiloté, cette icône spécifique 70 n'apparaît pas.

L'affichage de cette icône 70 est obtenu dès que l'utilisateur met le doigt sur un point quelconque d'une zone 68 de l'écran, par exemple une vaste zone constituée par la moitié droite de l'écran 18 à l'exception des symboles correspondant à des commandes tactiles déjà réservées (symboles 62 et 64 notamment). L'icône 70 apparaît sous le doigt de l'utilisateur lorsque celui-ci met son doigt, par exemple son pouce droit, sur un point quelconque de cette zone 68.

Ce contact du doigt sur un point quelconque de la zone 68 lorsque l'appareil est en mode autopiloté va, plus précisément, produire des actions suivantes :
- relevé des données des capteurs d'inclinaison de l'appareil, pour déterminer l'inclinaison de celui-ci( position selon les deux axes de tangage 32 et de roulis 34 par rapport à la verticale absolue dans un référentiel terrestre) au moment de l'entrée en contact du doigt, et définition de cette position comme la nouvelle position neutre pour l'application ultérieure de commandes par inclinaisons ;
- désactivation de l'autopilote et activation du mode réactif (sous réserve de la définition d'une "zone neutre" autour du point de contact, comme cela sera exposé plus bas) ;
- affichage de l'icône 70 sous le doigt de l'utilisateur - ce qui confirme la bonne exécution des actions précédentes ;
- mise à disposition sous le doigt de l'utilisateur de commandes de montée/descente et de rotation à gauche/rotation à droite, de la manière que l'on décrira plus bas.

Cet état dure tant que le doigt reste appuyé sur la zone 68, immobile ou en déplacement.

Dès que le contact du doigt est relâché, les actions inverses des précédentes seront exécutées, avec réactivation de l'autopilote et disparition de l'icône 70.

L'icône 70 est en fait constituée de deux icônes initialement superposées, à savoir une icône mobile 72 et une icône repère fixe 74. L'icône fixe 74 restera affichée au point de contact initial du doigt avec l'écran, tandis que l'icône mobile 72 suivra les déplacements du doigt sur ce même écran autour du point de contact initial (le doigt restant en contact avec la surface de l'écran tactile, en glissant sur celle-ci).

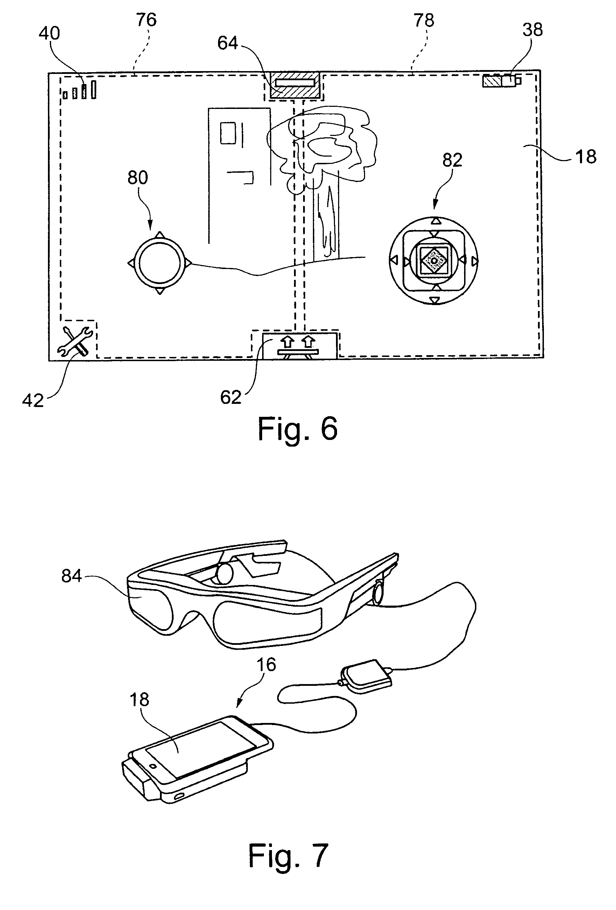

Dans une variante, on peut rajouter un axe horizontal sur le graphique de l'icône, qui montera et descendra en fonction de l'inclinaison de tangage réalisée, et se penchera selon l'inclinaison de roulis réalisée. L'icône s'apparentera ainsi à la représentation de l'horizon, de sorte que l'utilisateur aura un retour visuel de la commande d'inclinaison réalisée. Cette variante est particulièrement avantageuse avec un système de vision "tête haute" tel que celui qui sera décrit plus bas en référence à la figure 7. Les Figures 4 et 5 illustrent diverses positions relatives de l'icône mobile 72 par rapport à l'icône fixe 74.

L'appareil détecte la position courante de l'icône mobile 72 par rapport à l'icône fixe 74 et détermine dans quel quadrant se situe le centre de l'icône mobile 72 par rapport au centre de l'icône fixe 74 sur la surface de l'écran : nord, sud, est, ouest (on entendra par "quadrant nord" le quadrant correspondant à une direction de ± 45° par rapport à la direction verticale relative de l'écran, et de même pour les autres quadrants, *mutatis mutandis*). L'appareil évalue également la distance séparant l'icône mobile du centre de l'icône fixe 74.

Si l'icône mobile 72 se trouve :
- dans le quadrant sud, comme illustré Figure 4(a), ceci est interprété comme un ordre "descente" (équivalent à un appui sur le symbole 48 dans le cas de la Figure 2), et une commande correspondante est envoyée au drone ;
- dans le quadrant nord, comme illustré Figure 4(b), ceci est interprété comme un ordre "montée" (équivalent à un appui sur le symbole 46 dans le cas de la Figure 2), et une commande correspondante est envoyée au drone ;
- dans le quadrant ouest, comme illustré Figure 5(a), ceci est interprété comme un ordre "virage en lacet à gauche" (équivalent à un appui sur
- le symbole 50 dans le cas de la Figure 2), et une commande correspondante est envoyée au drone ;
- dans le quadrant est, comme illustré Figure 5(b), ceci est interprété comme un ordre "virage en lacet à droite" (équivalent à un appui sur le symbole 52 dans le cas de la Figure 2), et une commande correspondante est envoyée au drone.

Avantageusement, la commande n'est pas une commande "tout ou rien", mais une commande dont l'amplitude est modulée en fonction de l'écart mesuré entre l'icône mobile et l'icône fixe : la commande est alors proportionnelle à cette distance, ou bien modulée selon une autre loi, par exemple logarithmique.

On notera que toutes les commandes sont accessibles simultanément et peuvent être combinées entre elles. Par exemple, l'utilisateur pose le doigt, puis incline l'appareil vers la gauche : le drone part à gauche ... Il décale son doigt vers la gauche : le drone se penche et effectue une rotation en lacet en même temps que son virage à gauche ... Il déplace le doigt vers le haut : le drone monte en cercles concentriques, etc.

Il est également très aisé de disposer de commandes proportionnelles (c'est-à-dire ne fonctionnant pas simplement en "tout ou rien") : plus l'appareil est penché vers l'avant, plus le drone avance vite ... plus le doigt est déplacé vers le haut, plus la vitesse de montée est élevée ... plus le doigt est déplacé vers la gauche, plus la commande de lacet est accentuée, etc.

Il est ainsi possible de piloter le drone sur les trois axes d'un seul doigt, en pilotant également le régime moteur par la commande de montée/descente. Ces commandes simples sont transformées par le pilote automatique du drone en commandes complexes qui, en plus des consignes de pilotage, contrôlent la stabilité du drone à toutes les attitudes.

Diverses modalités particulières de mise en oeuvre peuvent être envisagées.

Notamment, lorsque le contact initial du doigt sur l'écran est trop près du bord de la zone tactile 68, certaines commandes peuvent être impossibles à réaliser, ou seulement avec un débattement trop faible. Si une telle situation est détectée, l'appareil active brièvement une alarme, par exemple un vibreur, pour signaler à l'utilisateur que son doigt n'est pas bien placé. Le logiciel de pilotage est toutefois activé, pour répondre aux commandes de la manière appropriée malgré les limitations résultant de la position du doigt.

Par ailleurs, il peut être prévu un seuil de déclenchement des commandes de pilotage, celles-ci n'étant générées qu'au-delà d'un écart minimum entre l'icône mobile et l'icône fixe, ce qui revient à définir une zone neutre autour de l'icône fixe 74.

Ou encore, et de préférence, le seuil de déclenchement des commandes tel que l'ordre de pilotage ne soit prise en compte que si la vitesse du déplacement du doigt sur l'écran est supérieure à un minimum prédéterminé. On évite ainsi la latence due au fait que, dans le cas précédent, il était nécessaire d'attendre que le doigt ait dépassé la zone neutre pour générer la commande, ajoutant un délai supplémentaire gênant pour commander le drone.

Le corollaire de cette autre manière de procéder est que l'on ne revient pas exactement au point de contact initial. Il est donc nécessaire de prévoir un point neutre flottant, redéfini à l'endroit où le doigt s'arrête à la fin du déplacement en retour (fin de l'activation de la commande). En d'autres termes, lors du déplacement inverse du point de contact (avec une vitesse du déplacement supérieure à un autre seuil minimal prédéterminé), il y aura recalage de la position initiale, la nouvelle position initiale étant redéfinie par le point d'achèvement de ce déplacement inverse.

Par exemple, dès que l'utilisateur bouge son doigt à une certaine vitesse vers le haut, ceci est interprété comme un ordre de montée. Et dès qu'il déplace son doigt vers le bas, ceci signifie qu'il veut interrompre la montée (il n'est pas nécessaire de déplacer le doigt jusqu'au point neutre initial, il suffit de faire glisser le doigt vers le bas à une certaine vitesse pour interrompre la commande). Il se peut toutefois que le doigt ait été déplacé moins loin vers le bas que vers le haut, et le dispositif doit en tenir compte rétablir le point neutre là ou le doigt se sera arrêté.

Dans une autre variante, l'activation du mode réactif peut être commandée en basculant l'appareil selon un axe quelconque, au-delà d'une valeur minimale prédéfinie de seuil d'inclinaison.

Dans un autre variante encore, il peut être intéressant de dissocier les commandes pour simplifier le pilotage du drone par des utilisateurs novices.

Cette variante est illustrée Figure 6, qui est homologue de la Figure 3 dans cette variante simplifiée.

Une partie des commandes est disponible à la main droite et l'autre partie est disponible à la main gauche. Dans l'exemple un doigt de la main droite est utilisé pour la commande en lacet et la commande de montée/descente, la main gauche étant utilisée pour les commandes de rotation en tangage et en roulis. L'écran est divisé à cet effet en deux zones 76, 78 destinées à chacune des commandes, et dans chacune des zones une icône respective 80, 82 apparaît lorsque l'utilisateur y pose son doigt. L'icône 82 est identique à l'icône de pilotage du mode de réalisation des Figures 3 à 5, alors que l'icône 80 indique simplement que le doigt est posé sur l'écran.

Le nouveau mode de pilotage que l'on vient de décrire présente, de façon générale, de multiples avantages.

*En premier lieu,* le principe fondamental est préservé, qui consiste à "prendre les commandes" en posant simplement le doigt sur un point de l'écran, et ordonner un point fixe (basculer vers le mode autopiloté) par le simple fait de "lâcher les commandes". De cette manière un utilisateur peu expérimenté peut prendre en main très facilement le drone

Mais dans le cas de l'invention, pour "prendre les commandes", c'est-à-dire passer en mode réactif, il n'est plus nécessaire d'appuyer sur une zone fixe précise ; il suffit de mettre le doigt sur une zone assez large de l'écran, concrètement sur un point quelconque de la moitié droite dans l'exemple illustré. Ceci peut se faire de façon intuitive sans regarder l'écran.

*En second lieu,* une fois le doigt posé (et maintenu) sur cette zone, le point de contact devient le centre de la commande, et il devient possible de piloter le drone d'un seul doigt :
- en déplaçant le doigt vers la droite l'utilisateur contrôle la commande en lacet vers la droite et il fait tourner le drone tourne sur lui-même dans le sens des aiguilles d'une montre, et n déplaçant son doigt vers la gauche, il contrôle la commande en lacet vers la gauche fait tourner le drone tourne dans le sens inverse ;
- en déplaçant son doigt vers le haut, il fait monter le drone ; en le déplaçant vers le bas, il le fait descendre.

Les autres commandes sont données par l'inclinaison du drone autour des deux axes principaux de l'appareil :
- en basculant l'appareil vers l'avant, le drone penche vers l'avant et avance, en basculant l'appareil vers l'arrière, le drone penche vers l'arrière et recule ;
- en basculant l'appareil vers la gauche, le drone penche vers la gauche et se déporte vers la gauche, en basculant l'appareil vers la droite, le drone penche vers la droite et se déporte vers la droite.

Ces quatre commandes peuvent éventuellement être accompagnées d'une zone neutre, par exemple en prévoyant un angle minimal à donner à l'appareil lorsqu'on le penche pour exécuter la commande de roulis ou de tangage, ou encore en déplaçant d'une certaine distance minimale le doigt au-delà du point de contact pour la commande de lacet et la commande d'altitude.

On notera que l'usage d'un seul doigt permet de moins masquer les messages ou informations essentiels pour l'utilisateur.

On peut en outre s'adresser aux gauchers et aux droitiers de la même manière, la zone tactile pour le point de contact couvrant autant la partie gauche que la partie droite de l'écran.

De plus, l'activation du tir peut se faire avec un doigt de la main opposée à celle passant les commandes de pilotage, sur une zone définie dans la partie opposée de l'écran.

Enfin, dans le cas de la variante simplifiée décrite plus haut en référence à la Figure 6, les commandes ne sont pas regroupées sous le même doigt, ce qui rend la coordination des commandes plus simple pour un utilisateur novice.

*En troisième lieu,* un autre progrès important tient au fait qu'il n'est plus nécessaire de garder l'appareil à plat.

Précédemment, pour commander l'inclinaison du drone sur deux axes en inclinant l'appareil, il était nécessaire dans le mode de pilotage réactif de mettre le doigt sur un point précis de l'écran avec l'appareil tenu à plat. Dans le cas de l'invention, lorsque l'utilisateur pose son doigt sur l'écran pour passer en mode réactif, la direction de la verticale (orientation dans un repère absolu terrestre) est enregistrée, et cette direction est utilisée comme nouvelle direction de référence, c'est-à-dire comme point neutre des commandes.

Il est donc possible d'activer le mode réactif même sur un appareil incliné, ce qui rend l'appareil bien plus commode à utiliser et évite notamment les reflets du soleil sur la surface de l'écran lorsque le drone est piloté en extérieur.

*En quatrième lieu,* comme illustré Figure 7, le mode de pilotage que l'on vient d'indiquer se prête particulièrement bien à l'utilisation d'un afficheur déporté de type lunettes vidéo 84 en combinaison avec l'appareil 16. Ces lunettes sont constituées de deux afficheurs LCD assemblés à une monture de lunettes et branchés sur la sortie vidéo de l'appareil 16. Ces lunettes permettent une plus grande immersion dans l'univers de la réalité augmentée du jeu.

Le perfectionnement de l'invention, qui autorise de mettre son doigt sur une large zone de l'appareil pour activer le mode réactif et appliquer des commandes de pilotage est un avantage particulièrement intéressant lorsque l'on utilise ces lunettes, qui ne permettent pas à l'utilisateur de voir ses mains ni donc de regarder où il peut poser le doigt sur l'écran de l'appareil. Afin de conforter l'utilisateur qui ne voit plus ses mains, la position de son doigt par rapport à la surface de contrôle est affichée sur l'écran des lunettes, ce qui améliore la rétroaction de l'appareil et l'utilisateur saura exactement l'état de ses commandes (affichage des icônes mobile et fixe, de la même manière qu'illustré sur les Figures 4 et 5), avec ainsi une impression de type "pilotage avec affichage tête haute".

Un autre aspect de la présente invention réside dans la manière de délivrer les commandes auxiliaires dans le cadre du mode de pilotage que l'on vient d'exposer.

En effet, le drone est un élément d'un jeu vidéo dans lequel le joueur pilote le drone et doit en même temps effectuer des actions de jeu, par exemple tirer sur des cibles virtuelles (adversaire ou objectif ennemi affiché sur l'écran, dans un jeu de réalité augmentée) ou sur des cibles réelles munies de zones de détections (cibles fixes ou autre drone, dans un jeu de poursuite).

La commande de tir doit être activée très rapidement, presque instinctivement, par le joueur, s'il veut maximiser ses chances d'atteindre la cible visée.

Or lorsque le "mode réactif" est activé, le joueur pilote le drone. Il est donc accaparé par le pilotage, ses mains sont occupées et sa vue est mobilisée à regarder le drone.

Tel est tout particulièrement le cas avec la variante évoquée plus haut consistant à scinder les commandes entre les deux parties droite et gauche de l'écran de l'appareil de télécommande, avec une partie des commandes disponible à la main droite et l'autre partie à la main gauche (par exemple un doigt de la main droite pour les commandes de gaz et de lacet, et un doigt de la main gauche pour les commandes de rotation en tangage et en roulis).

Pour pallier cet inconvénient, l'invention propose un fonctionnement en "tir assisté" dans lequel le joueur est tout d'abord alerté par un événement sonore émis par l'appareil de télécommande lorsque le logiciel de reconnaissance de forme d'une des caméras du drone repère une cible, telle que définie par le logiciel de jeu implémenté dans cet appareil.

Le joueur pourra alors déclencher l'ordre de tir en imprimant un secousse à l'appareil de télécommande, ceci sans interrompre le pilotage, sans déplacer ses mains, et sans quitter le drone des yeux. L'accéléromètre intégré à l'appareil de télécommande enregistre cette secousse, délivre au logiciel de jeu l'ordre de tir, et l'arme virtuelle fait feu.

La secousse est enregistrée par l'accéléromètre de l'appareil de télécommande sous forme d'un pic du signal d'accélération, pic qui peut être aisément discriminé des autres commandes pilotées par l'accéléromètre par un filtrage passe-haut déterminant la survenue d'un mouvement supérieur à un seuil (le coup sec imprimé par l'utilisateur) dans au moins l'un des axes des l'accéléromètre.

Durant la courte période de temps du pic d'accélération détecté par l'accéléromètre, les autres commandes de vol contrôlées par ce même accéléromètre sont conservées dans leur état antérieur, de manière que la secousse ne soit pas interprétée comme une commande de pilotage et soit sans effet sur le contrôle du mouvement du drone, et donc sur ses évolutions dans l'air.

## Revendications

1. Un procédé de mise en oeuvre d'un appareil (16) de télécommande d'un drone, notamment d'un drone à voilure tournante (10),
l'appareil (16) étant un appareil portatif comprenant : un écran tactile (18) ; des moyens aptes à détecter au moins un contact d'un doigt (20) d'un utilisateur sur la surface de l'écran, et à déterminer la position de ce au moins un point de contact du doigt par rapport à un symbole correspondant affiché sur l'écran ; et des moyens de transmission sans fil de données, aptes à émettre des commandes à destination du drone ;
ce procédé comprenant l'activation de commandes de pilotage du drone par contact et/ou déplacement du doigt à l'emplacement de symboles de pilotage correspondants affichés sur l'écran,
procédé **caractérisé par** les étapes suivantes :
a) détection du contact du doigt en un point de contact quelconque d'au moins une zone prédéfinie (68) de l'écran ;
b) affichage sur l'écran, audit point de contact, d'une icône de pilotage (70) comportant une icône mobile (72) dont la position d'affichage sur l'écran suit le déplacement éventuel du point de contact du doigt sur l'écran depuis une position initiale jusqu'à une position décalée ;
c) détection dudit déplacement de l'icône mobile ;
d) sur détection dudit déplacement, analyse de la direction et/ou de l'amplitude et/ou de la vitesse dudit déplacement par rapport à la position initiale ; et
g) activation d'une commande de pilotage fonction du résultat de ladite analyse.

2. Le procédé de la revendication 1, comprenant en outre, après analyse de la direction et/ou de l'amplitude et/ou de la vitesse dudit déplacement par rapport à la position initiale, une étape de :
e) discrimination de ladite commande de pilotage à activer à l'étape g) parmi plusieurs commandes de pilotage différentes, en fonction de la direction dudit déplacement.

3. Le procédé de la revendication 2, dans lequel ladite commande de pilotage à activer à l'étape g) est une commande de montée ou de descente du drone, lorsque la direction dudit déplacement est principalement orientée vers le haut ou vers le bas, respectivement, par rapport au sens de l'image affichée sur l'écran tactile.

4. Le procédé de la revendication 2, dans lequel ladite commande de pilotage à activer à l'étape g) est une commande de rotation à gauche ou à droite autour d'un axe de lacet (26) du drone, lorsque la direction dudit déplacement est principalement orientée vers la gauche ou vers la droite, respectivement, par rapport au sens de l'image affichée sur l'écran tactile.

5. Le procédé de la revendication 1, comprenant en outre, après analyse de la direction et/ou de l'amplitude dudit déplacement par rapport à la position initiale, une étape de :
f) quantification de ladite commande de pilotage à activer à l'étape g) en fonction de l'amplitude dudit déplacement.

6. Le procédé de la revendication 1, pour la télécommande d'un drone à voilure tournante pourvu d'un système sélectivement activable de stabilisation autonome en vol stationnaire en l'absence de commande transmise par l'appareil,
dans lequel le système de stabilisation autonome est désactivé en réponse à la détection dudit contact du doigt à l'étape a).

7. Le procédé de la revendication 6, dans lequel le système de stabilisation autonome reste désactivé après l'étape a) pendant toute la durée où est détecté ledit contact du doigt, et est activé en réponse à la détection d'une perte de ce contact.

8. Le procédé de la revendication 6, comprenant la définition autour du point de contact détecté à l'étape a) d'une zone neutre telle que le système de stabilisation autonome reste activé tant que la position du point de contact courant du doigt se situe à l'intérieur de ladite zone neutre.

9. Le procédé de la revendication 1, dans lequel l'icône de pilotage (70) affichée à l'étape b) comprend, outre l'icône mobile (72), une icône repère fixe (74) dont la position d'affichage est maintenue à la position initiale du point de contact du doigt sur l'écran même en cas de déplacement consécutif de ce point de contact.

10. Le procédé de la revendication 1, pour la mise en oeuvre d'un appareil (16) comportant des moyens pour détecter l'inclinaison de l'appareil selon deux axes (32, 34) par rapport à un axe neutre de référence d'un repère terrestre,
dans lequel la détection dudit contact du doigt à l'étape a) active des étapes de :
- enregistrement de la direction de la verticale terrestre par rapport au repère de l'appareil au moment de la détection du contact, et
- désignation de cette verticale comme nouvel axe de référence.

11. Le procédé de la revendication 10, comprenant en outre l'activation d'une commande de pilotage en rotation selon un axe de tangage (22) et/ou selon un axe de roulis (24), en fonction de l'inclinaison de l'appareil respectivement détectée selon l'un et/ou l'autre desdits deux axes (32, 34) par rapport à l'axe de référence.

12. Le procédé de la revendication 11, comprenant la définition d'un domaine angulaire neutre autour de l'axe de référence tel que les commandes de tangage et de roulis ne soient activées que pour une inclinaison de l'appareil au-delà de ce domaine angulaire neutre.

13. Le procédé de la revendication 12, pour la télécommande d'un drone à voilure tournante pourvu d'un système sélectivement activable de stabilisation autonome en vol stationnaire en l'absence de commande transmise par l'appareil, dans lequel le système de stabilisation autonome n'est désactivé que pour une inclinaison de l'appareil au-delà dudit domaine angulaire neutre.

14. Le procédé de la revendication 1, pour la mise en oeuvre d'un appareil (16) comportant un capteur accélérométrique, comprenant une étape de :
- détection d'un pic d'accélération imprimé à l'appareil par l'utilisateur, et
- génération d'une commande en réponse à ladite détection de pic.

15. Le procédé de la revendication 14, dans lequel ladite commande est une commande de tir appliquée en entrée à un logiciel de jeu implémenté dans ledit appareil (16).

16. Le procédé de la revendication 14, dans lequel l'étape de détection comprend un filtrage passe-haut du signal d'accélération délivré par le capteur accélérométrique de l'appareil (16).

17. Le procédé de la revendication 14, comprenant également :
- l'enregistrement de l'état des commandes de pilotage sur détection d'un pic d'accélération, et
- le maintien dudit état pendant la durée du pic d'accélération.

18. Le procédé de la revendication 1, pour la mise en oeuvre d'un appareil (16) couplé à un périphérique d'affichage déporté, notamment à des lunettes vidéo (84), comprenant la duplication sur le périphérique déporté de ladite icône de pilotage (70) affichée sur l'écran (16), de manière à réaliser un affichage de type tête haute.

19. Le procédé de la revendication 1, comprenant en outre l'émission d'un signal d'alerte lorsque la distance minimale entre le point de contact détecté à l'étape a) et le bord de ladite zone prédéfinie de l'écran est inférieure à une distance prédéterminée.

20. Le procédé de la revendication 1, comprenant la définition autour du point de contact détecté à l'étape a) d'une zone neutre telle que le déplacement de l'icône de pilotage aux étapes c) et d) ne soit prise en compte que si ladite position décalée se situe au-delà de ladite zone neutre.

21. Le procédé de la revendication 1, comprenant la définition autour du point de contact détecté à l'étape a) d'une zone neutre telle que le déplacement de l'icône de pilotage aux étapes c) et d) ne soit prise en compte que si la vitesse du déplacement du point de contact du doigt sur l'écran par rapport à la position initiale est supérieure à un seuil minimal prédéterminé.

22. Le procédé de la revendication 21, comprenant en outre, en cas de déplacement inverse du point de contact avec une vitesse du déplacement supérieure à un autre seuil minimal prédéterminé, une étape de recalage de ladite position initiale, la nouvelle position initiale étant redéfinie par le point d'achèvement dudit déplacement inverse.

23. Un appareil (16) de télécommande d'un drone, notamment d'un drone à voilure tournante (10), **caractérisé en ce que** cet appareil est un appareil portatif comprenant :
- un écran tactile (18) ;
- des moyens aptes à détecter le contact d'un doigt (20) d'un utilisateur sur la surface de l'écran et à déterminer la position du point de contact de ce doigt par rapport à un symbole correspondant affiché sur l'écran ;
- des moyens de transmission sans fil de données, aptes à émettre des commandes à destination du drone ; et
- des moyens de mise en oeuvre d'un procédé selon l'une des revendications 1 à 22.

24. Un logiciel, téléchargeable dans un appareil portatif (16) comprenant :
- un écran tactile (18) ;
- des moyens aptes à détecter le contact d'un doigt (20) d'un utilisateur sur la surface de l'écran et à déterminer la position du point de contact de ce doigt par rapport à un symbole correspondant affiché sur l'écran ; et
- des moyens de transmission sans fil de données, aptes à émettre des commandes à destination du drone,
ce logiciel comprenant des instructions aptes mettre en oeuvre un procédé selon l'une des revendications 1 à 22 pour la télécommande d'un drone, notamment d'un drone à voilure tournante (10).

## Claims

1. Method for using a device (16) for remotely controlling a drone, notably a rotary-wing drone (10), the device (16) being a portable device comprising: a touch-sensitive screen (18); means capable of detecting at least one contact of a finger (20) of a user on the surface of the screen, and of determining the position of this at least one point of contact of the finger relative to a corresponding symbol displayed on the screen; and wireless data-transmission means capable of transmitting commands to the drone;
this method comprising the activation of commands for controlling the drone by contact and/or movement of the finger to the location of corresponding control symbols displayed on the screen,
a method **characterized by** the following steps:
a) detection of the contact of the finger at any point of contact of at least one predefined zone (68) of the screen;
b) display on the screen at the said point of contact of a control icon (70) comprising a movable icon (72) the position of display of which on the screen follows the possible movement of the point of contact of the finger on the screen from an initial position to an offset position;
c) detection of the said movement of the movable icon;
d) on detection of the said movement, analysis of the direction and/or of the amplitude and/or of the speed of the said movement relative to the initial position; and
g) activation of a control command that is a function of the result of the said analysis.

2. Method according to Claim 1, also comprising, after analysis of the direction and/or the amplitude and/or the speed of the said movement relative to the initial position, a step of:
e) determination of the said control command to be activated in step g) out of several different control commands, as a function of the direction of the said movement.

3. Method according to Claim 2, in which the said control command to be activated in step g) is a drone climb or descend command, when the direction of the said movement is mainly oriented upwards or downwards, respectively, relative to the direction of the image displayed on the touch-sensitive screen.

4. Method according to Claim 2, in which the said control command to be activated in step g) is a command to rotate to the left or to the right about a yaw axis (26) of the drone, when the direction of the said movement is mainly oriented to the left or to the right, respectively, relative to the direction of the image displayed on the touch-sensitive screen.

5. Method according to Claim 1, also comprising, after analysis of the direction and/or the amplitude of the said movement relative to the initial position, a step of:
f) quantifying the said control command to be activated in step g) as a function of the amplitude of the said movement.

6. The method according to Claim 1, for the remote control of a rotary-wing drone provided with a selectively activatable system of standalone stabilization in stationary flight in the absence of a command transmitted by the device,
in which the standalone stabilization system is deactivated in response to the detection of the said contact of the finger in step a).

7. Method according to Claim 6, in which the standalone stabilization system remains deactivated after step a) throughout the period in which the said contact of the finger is detected, and is activated in response to the detection of a loss of this contact.

8. Method according to Claim 6, comprising the definition around the point of contact detected in step a) of a neutral zone such that the standalone stabilization system remains activated so long as the position of the current point of contact of the finger is situated inside the said neutral zone.

9. Method according to Claim 1, in which the control icon (70) displayed in step b) comprises, in addition to the movable icon (72), a fixed reference-point icon (74), the display position of which is maintained in the initial position of the point of contact of the finger on the screen even in the case of consecutive movement of this point of contact.

10. The method according to Claim 1, for the use of a device (16) comprising means for detecting the inclination of the device on two axes (32, 34) relative to a reference neutral axis of a terrestrial reference point,
in which the detection of the said contact of the finger in step a) activates steps of:
- recording the direction of the terrestrial vertical relative to the reference point of the device at the time of detection of the contact, and
- designation of this vertical as the new axis of reference.

11. Method according to Claim 10, also comprising the activation of a rotation control command on an axis of pitch (22) and/or on an axis of roll (24), as a function of the inclination of the device respectively detected on one and/or the other of the said two axes (32, 34) relative to the axis of reference.

12. Method according to Claim 11, comprising the definition of a neutral angular range around the axis of reference such that the pitch and roll commands are activated only for an inclination of the device beyond this neutral angular range.

13. Method according to Claim 12, for the remote control of a rotary-wing drone provided with a selectively activatable system of standalone stabilization in stationary flight in the absence of a command transmitted by the device, in which the system of standalone stabilization is deactivated only for an inclination of the device beyond the said neutral angular range.

14. Method according to Claim 1, for the use of a device (16) comprising an accelerometer sensor, comprising a step of:
- detection of a peak of acceleration imparted on the device by the user, and
- generation of a command in response to the said peak detection.

15. Method according to Claim 14, in which the said command is a fire command applied as an input on a games software program implemented in the said device (16).

16. Method according to Claim 14, in which the step of detection comprises a high-pass filtering of the acceleration signal delivered by the accelerometer sensor of the device (16).

17. Method according to Claim 14, also comprising:
- the recording of the state of the control commands on detection of a peak of acceleration, and
- the maintenance of the said state throughout the peak of acceleration.

18. Method according to Claim 1, for the use of a device (16) coupled to a remote display peripheral device, notably to video spectacles (84), comprising the duplication on the remote peripheral device of the said control icon (70) displayed on the screen (16) so as to produce a display of the head-up type.

19. Method according to Claim 1, also comprising the transmission of a warning signal when the minimum distance between the point of contact detected in step a) and the edge of the said predefined zone of the screen is less than a predetermined distance.

20. Method according to Claim 1, comprising the definition around the point of contact detected in step a) of a neutral zone such that the movement of the control icon in steps c) and d) is taken into account only if the said offset position is situated beyond the said neutral zone.

21. Method according to Claim 1, comprising the definition around the point of contact detected in step a) of a neutral zone such that the movement of the control icon in steps c) and d) is taken into account only if the speed of the movement of the point of contact of the finger on the screen relative to the initial position is greater than a predetermined minimum threshold.

22. Method according to Claim 21, also comprising, in the case of reverse movement of the point of contact with a speed of the movement greater than another predetermined minimum threshold, a step of resetting the said initial position, the new initial position being redefined by the point of completion of the said reverse movement.

23. Device (16) for remotely controlling a drone, notably a rotary-wing drone (10), **characterized in that** this device is a portable device comprising:
- a touch-sensitive screen (18);
- means capable of detecting the contact of a finger (20) of a user on the surface of the screen and of determining the position of the point of contact of this finger relative to a corresponding symbol displayed on the screen;
- wireless data-transmission means capable of transmitting commands to the drone; and
- means for using a method according to one of Claims 1 to 22.

24. Software program that can be downloaded to a portable device (16) comprising:
- a touch-sensitive screen (18);
- means capable of detecting the contact of a finger (20) of a user on the surface of the screen and of determining the position of the point of contact of this finger relative to a corresponding symbol displayed on the screen;
and
- - wireless data-transmission means capable of transmitting commands to the drone,
this software program comprising instructions capable of using a method according to one of Claims 1 to 22 for the remote control of a drone, notably a rotary-wing drone (10).

## Patentansprüche

1. Verfahren zur Benutzung eines Fernsteuerungsgeräts (16) einer Drohne, insbesondere einer Drehflügeldrohne (10),
wobei das Gerät (16) ein tragbares Gerät ist, das Folgendes enthält: einen Berührungsbildschirm (18); Einrichtungen, die mindestens einen Kontakt eines Fingers (20) eines Benutzers auf der Fläche des Bildschirms erfassen und die Stellung dieses mindestens einen Kontaktpunkts des Fingers bezüglich eines entsprechenden auf dem Bildschirm angezeigten Symbols bestimmen können; und Einrichtungen zur drahtlosen Datenübertragung, die Befehle an die Drohne senden können;
wobei dieses Verfahren die Aktivierung von Steuerbefehlen der Drohne durch Kontakt und/oder Verschiebung des Fingers an die Stelle von entsprechenden auf dem Bildschirm angezeigten Steuersymbolen enthält,
wobei das Verfahren durch die folgenden Schritte **gekennzeichnet** ist:
a) Erfassung des Kontakts des Fingers an einem beliebigen Kontaktpunkt mindestens einer vordefinierten Zone (68) des Bildschirms;
b) Anzeige auf dem Bildschirm, an dem Kontaktpunkt, eines Steuer-Icons (70), das ein bewegliches Icon (72) aufweist, dessen Anzeigestellung auf dem Bildschirm der möglichen Verschiebung des Kontaktpunkts des Fingers auf dem Bildschirm von einer Anfangsstellung bis zu einer versetzten Stellung folgt;
c) Erfassung der Verschiebung des beweglichen Icons;
d) bei Erfassung der Verschiebung, Analyse der Richtung und/oder der Größe und/oder der Geschwindigkeit der Verschiebung bezüglich der Anfangsstellung; und
g) Aktivierung eines Steuerbefehls abhängig von dem Ergebnis der Analyse.

2. Verfahren nach Anspruch 1, das außerdem nach der Analyse der Richtung und/oder der Größe und/oder der Geschwindigkeit der Verschiebung bezüglich der Anfangsstellung den folgenden Schritt enthält:
e) Unterscheidung des im Schritt g) zu aktivierenden Steuerbefehls unter mehreren verschiedenen Steuerbefehlen abhängig von der Richtung der Verschiebung.

3. Verfahren nach Anspruch 2, bei dem der im Schritt g) zu aktivierende Steuerbefehl eine Steuerung des Aufstiegs oder Absinkens der Drohne ist, wenn die Richtung der Verschiebung bezüglich der Richtung des auf dem Berührungsbildschirm angezeigten Bilds hauptsächlich nach oben bzw. nach unten ausgerichtet ist.

4. Verfahren nach Anspruch 2, bei dem der im Schritt g) zu aktivierende Steuerbefehl ein Drehbefehl nach links oder nach rechts um eine Gierachse (26) der Drohne ist, wenn die Richtung der Verschiebung bezüglich der Richtung des auf dem Berührungsbildschirm angezeigten Bilds hauptsächlich nach links bzw. rechts ausgerichtet ist.

5. Verfahren nach Anspruch 1, das weiter nach der Analyse der Richtung und/oder der Größe der Verschiebung bezüglich der Anfangsstellung den folgenden Schritt enthält:
f) Quantisierung des im Schritt g) zu aktivierenden Steuerbefehls abhängig von der Größe der Verschiebung.

6. Verfahren nach Anspruch 1 zur Fernsteuerung einer Drehflügeldrohne, die mit einem selektiv aktivierbaren System der autonomen Stabilisierung im Schwebeflug in Abwesenheit eines vom Gerät übertragenen Befehls versehen ist,
wobei das autonome Stabilisierungssystem als Reaktion auf die Erfassung des Kontakts des Fingers im Schritt a) deaktiviert wird.

7. Verfahren nach Anspruch 6, bei dem das autonome Stabilisierungssystem nach dem Schritt a) während der ganzen Dauer deaktiviert bleibt, während der der Kontakt des Fingers erfasst wird, und als Reaktion auf die Erfassung eines Kontaktverlusts aktiviert wird.

8. Verfahren nach Anspruch 6, das die Definition einer neutralen Zone um den im Schritt a) erfassten Kontaktpunkt enthält, derart, dass das autonome Stabilisierungssystem so lange aktiviert bleibt, wie die Stellung des laufenden Kontaktpunkts des Fingers sich innerhalb der neutralen Zone befindet.

9. Verfahren nach Anspruch 1, bei dem das im Schritt b) angezeigte Steuer-Icon (70) außer dem beweglichen Icon (72) ein ortsfestes Bezugs-Icon (74) enthält, dessen Anzeigestellung auf der Anfangsstellung des Kontaktpunkts des Fingers auf dem Bildschirm gehalten wird, selbst im Fall einer folgenden Verschiebung dieses Kontaktpunkts.

10. Verfahren nach Anspruch 1 zur Anwendung eines Geräts (16), das Einrichtungen zur Erfassung der Neigung des Geräts gemäß zwei Achsen (32, 34) bezüglich einer neutralen Bezugsachse eines terrestrischen Bezugsystems aufweist,
bei dem die Erfassung des Kontakts des Fingers im Schritt a) die folgenden Schritte aktiviert:
- Aufzeichnung der Richtung der terrestrischen Senkrechten bezüglich des Bezugssystems des Geräts im Moment der Erfassung des Kontakts, und
- Benennung dieser Senkrechten als neuer Bezugsachse.

11. Verfahren nach Anspruch 10, das außerdem die Aktivierung eines Drehsteuerbefehls gemäß einer Nickachse (22) und/oder einer Rollachse (24) abhängig von der Neigung des Geräts enthält, die gemäß der einen und/oder der anderen der zwei Achsen (32, 34) bezüglich der Bezugsachse erfasst wird.

12. Verfahren nach Anspruch 11, das die Definition eines neutralen Winkelbereichs um die Bezugsachse enthält, derart, dass die Nick- und Rollbefehle nur bei einer Neigung des Geräts jenseits dieses neutralen Winkelbereichs aktiviert werden.

13. Verfahren nach Anspruch 12 zur Fernsteuerung einer Drehflügeldrohne, die mit einem selektiv aktivierbaren System der autonomen Stabilisierung im Schwebeflug in Abwesenheit eines vom Gerät übertragenen Befehls ausgestattet ist, wobei das autonome Stabilisierungssystem nur für eine Neigung des Geräts jenseits des neutralen Winkelbereichs deaktiviert wird.

14. Verfahren nach Anspruch 1 zur Benutzung eines Geräts (16), das einen Beschleunigungssensor aufweist, das einen Schritt aufweist der:
- Erfassung einer Beschleunigungsspitze, die dem Gerät vom Benutzer verliehen wird, und
- Erzeugung eines Befehls als Reaktion auf die Spitzenerfassung.

15. Verfahren nach Anspruch 14, bei dem der Befehl ein Schießbefehl ist, der am Eingang an eine Spiel-Software angewendet wird, die in dem Gerät (16) implementiert ist.

16. Verfahren nach Anspruch 14, bei dem der Erfassungsschritt eine Hochpass-Filterung des Beschleunigungssignals enthält, das von dem Beschleunigungssensor des Geräts (16) geliefert wird.

17. Verfahren nach Anspruch 14, das ebenfalls Folgendes enthält:
- die Aufzeichnung des Zustands der Steuerbefehle bei Erfassung einer Beschleunigungsspitze, und
- die Beibehaltung des Zustands während der Dauer der Beschleunigungsspitze.

18. Verfahren nach Anspruch 1 zur Benutzung eines Geräts (16), das mit einem ausgelagerten Anzeige-Peripheriegerät gekoppelt ist, insbesondere mit einer Videobrille (84), das die Nachbildung des auf dem Bildschirm (16) angezeigten Steuer-Icons (70) auf dem ausgelagerten Peripheriegerät enthält, um eine Head-up-Anzeige herzustellen.

19. Verfahren nach Anspruch 1, das außerdem das Senden eines Warnsignals enthält, wenn der Mindestabstand zwischen dem im Schritt a) erfassten Kontaktpunkt und dem Rand der vordefinierten Zone des Bildschirms geringer als ein vorbestimmter Abstand ist.

20. Verfahren nach Anspruch 1, das die Definition um den im Schritt a) erfassten Kontaktpunkt einer derartigen neutralen Zone enthält, dass die Verschiebung des Steuer-Icons in den Schritten c) und d) nur berücksichtigt wird, wenn die versetzte Stellung sich jenseits der neutralen Zone befindet.

21. Verfahren nach Anspruch 1, das die Definition um den im Schritt a) erfassten Kontaktpunkt einer derartigen neutralen Zone enthält, dass die Verschiebung des Steuer-Icons in den Schritten c) und d) nur berücksichtigt wird, wenn die Geschwindigkeit der Verschiebung des Kontaktpunkts des Fingers auf dem Bildschirm bezüglich der Anfangsstellung größer ist als eine vorbestimmte Mindestschwelle.

22. Verfahren nach Anspruch 21, das außerdem im Fall einer umgekehrten Verschiebung des Kontaktpunkts mit einer Geschwindigkeit der Verschiebung höher als eine andere vorbestimmte Mindestschwelle einen Schritt der Neueinstellung der Anfangsstellung enthält, wobei die neue Anfangsstellung durch den Beendigungspunkt der umgekehrten Verschiebung neu definiert wird.

23. Gerät (16) zur Fernsteuerung einer Drohne, insbesondere einer Drehflügeldrohne (10), **dadurch gekennzeichnet, dass** dieses Gerät ein tragbares Gerät ist, das Folgendes enthält:
- einen Berührungsbildschirm (18);
- Einrichtungen, die den Kontakt eines Fingers (20) eines Benutzers auf der Fläche des Bildschirms erfassen und die Stellung des Kontaktpunkts dieses Fingers bezüglich eines entsprechenden auf dem Bildschirm angezeigten Symbols bestimmen können;
- Einrichtungen zur drahtlosen Datenübertragung, die Befehle an die Drohne senden können; und
- Einrichtungen zur Durchführung eines Verfahrens nach einem der Ansprüche 1 bis 22.

24. Software, die in ein tragbares Gerät (16) heruntergeladen werden kann, das Folgendes
enthält:
- einen Berührungsbildschirm (18),
- Einrichtungen, die den Kontakt eines Fingers (20) eines Benutzers auf der Fläche des Bildschirms erfassen und die Stellung des Kontaktpunkts dieses Fingers bezüglich eines entsprechenden auf dem Bildschirm angezeigten Symbols bestimmen können; und
- Einrichtungen zur drahtlosen Übertragung von Daten, die Befehle an die Drohne senden können,
wobei diese Software Anweisungen enthält, die ein Verfahren nach einem der Ansprüche 1 bis 22 zur Fernsteuerung einer Drohne, insbesondere einer Drehflügeldrohne (10), durchführen können.
